# EUROPÄISCHE PATENTSCHRIFT

(11) **EP 3 303 808 B1**
(45) Veröffentlichungstag und Bekanntmachung des Hinweises auf die Patenterteilung: **23.03.2022**
(21) Anmeldenummer: 16719858.9
(22) Anmeldetag: 29.04.2016
(51) Int. Cl.: F02F 3/00, F02F 3/02

(54) **KOLBEN FÜR EINEN VERBRENNUNGSMOTOR**
PISTON FOR AN INTERNAL COMBUSTION ENGINE
PISTON DE MOTEUR À COMBUSTION INTERNE

(30) Priorität: 26.05.2015 DE 102015209591
(43) Veröffentlichungstag der Anmeldung: 11.04.2018
(73) Patentinhaber: Federal-Mogul Nürnberg GmbH, 90441 Nürnberg (DE)
(72) Erfinder: MESKE, Ralf, 91126 Schwabach (DE); KLEINLEIN, Carolin, 90411 Nürnberg (DE); MERGLER, Harald, 90411 Nürnberg (DE)
(74) Vertreter: Hoffmann Eitle
(86) Internationale Anmeldenummer: PCT/EP2016/059639
(87) Internationale Veröffentlichungsnummer: WO 2016/188704

(56) Entgegenhaltungen:
- DE-C- 428 008
- JP-A- H0 315 649
- JP-A- 2012 136 972
- US-A- 5 701 803

## Beschreibung

### Technisches Gebiet

Die Erfindung betrifft einen Kolben für einen Verbrennungsmotor.

Moderne Kolben für Verbrennungsmotoren weisen üblicherweise zwei Schaftwände auf, die Abschnitten einer Zylindermantelfläche entsprechen und zur Anlage an eine Zylinderbohrung oder -laufbuchse vorgesehen sind. Die beiden Schaftwände sind üblicherweise durch Verbindungswände verbunden, welche die Kolbenbolzennaben tragen. Die Schaftwände sind durch hohe Seitenkräfte belastet, so dass sie entsprechend steif sein müssen. Gleichzeitig ist es eine stets vorgegebene Anforderung an Kolben für Verbrennungsmotoren, dass sie möglichst wenig Gewicht aufweisen.

### Stand der Technik

Als Vorbenutzungsgegenstände sind Kolben bekannt, bei denen die Wanddicke der Schaftwände zu deren Mitte hin (in Umfangsrichtung) abnimmt oder konstant ist.

Ferner ist es beispielsweise aus der DE 44 14 678 A1 bekannt, in der Mitte der Schaftwände eine Rippe vorzusehen.

Eine ähnliche Gestaltung ist aus der JP 2012/136972 A bekannt, bei der die Wanddicke der Schaftwände zu den seitlichen Bereichen hin ergänzend zunehmen kann, sich die in Umfangsrichtung mittige Rippe jedoch in Richtung des Kolbenbodens, an dem der Kolben den Verbrennungsraum begrenzt, verbreitert. Ein weiterer Kolben ist aus der JP 2012/136972 A bekannt, der an der Kolbeninnenseite in einem Schnitt senkrecht zur Kolbenachse tangentenstetig ist.

### Darstellung der Erfindung

Vor diesem Hintergrund liegt der Erfindung die Aufgabe zugrunde, einen Kolben für einen Verbrennungsmotor zur Verfügung zu stellen, der im Hinblick auf die Steifigkeit der Schaftwand verbessert ist und/oder eine Gewichtseinsparung ermöglicht.

Die Lösung der Aufgabe erfolgt durch den im Patentanspruch 1 beschriebenen Kolben.

Demzufolge weist dieser zumindest eine Schaftwand auf, deren Dicke in einem in Umfangsrichtung mittleren Bereich und in zumindest einem, bevorzugt beiden seitlichen Bereich(en) größer ist als zwischen dem mittleren Bereich und dem jeweiligen seitlichen Bereich. Ferner ist die Kontur zumindest einer Schaftwand in einem Schnitt senkrecht zur Kolbenachse an der Innenseite krümmungsstetig, und die Wanddickenverteilung ist in Richtung der Kolbenachse im Wesentlichen konstant.

Unter dem "seitlichen Bereich" werden diejenigen Bereiche der betrachteten Schaftwand verstanden, an denen die Schaftwand mit der jeweiligen Verbindungswand verbunden ist. Mit anderen Worten, wenn man die jeweilige Verbindungswand gedanklich bis zur Schaftaußenseite verlängert, vergrößert sich die Wanddicke der Schaftwand bereits vor Erreichen dieser verlängerten Verbindungswand. Unter "krümmungsstetig" wird verstanden, dass die 2. Ableitung der Kontur der Schaftwand in einem Schnitt senkrecht zur Kolbenachse stetig, d.h. ohne Sprünge verläuft, was beispielsweise mit einer Darstellung durch Spline-Kurven erreicht werden kann. Beispielsweise kann der mittlere Bereich der betrachteten Schaftwand an der Kolbeninnenseite konvex gekrümmt sein und krümmungsstetig in eine konkave Krümmung übergehen, die über eine jeweilige Stelle mit geringster Wanddicke zu den seitlichen Bereichen mit ansteigender Wanddicke verläuft.

Die Tatsache, dass die Wanddickenverteilung in Richtung der Kolbenachse im Wesentlichen konstant ist, äußert sich darin, dass sich die Bereiche größerer Wanddicke, beispielsweise in der Mitte und an den Seiten, in Richtung der Kolbenachse in Umfangsrichtung nicht verbreitern, dass mit anderen Worten jeder Schnitt senkrecht zur Kolbenachse an unterschiedlichen Stellen entlang der Kolbenachse im Wesentlichen die gleiche Wanddickenverteilung und/oder die gleichen Stellen minimaler und/oder maximaler Wanddicke zeigt und die Wanddicke allenfalls insgesamt zunimmt.

Es konnte festgestellt werden, dass durch die erfindungsgemäße Wanddickenverteilung bei gleichbleibender Steifigkeit eine Gewichtseinsparung von bis zu 25% an der betrachteten Schaftwand oder, bei gleichem Gewicht, eine um 25% höhere Steifigkeit erreichbar ist. Zugrunde liegt hierbei nicht der Gedanke, an der Kolbeninnenseite im mittleren Bereich eine Rippe "aufzusetzen", sondern die Überlegung, die Schaftwand in einem Schnitt senkrecht zur Kolbenachse als Biegebalken mit einer etwa mittig angreifenden Einzellast oder einer konstanten Flächenlast zu betrachten, für den eine konstante Spanungsverteilung zu ermitteln ist. Diese Überlegungen führen zu der vorangehend beschriebenen Wanddickenverteilung entlang des Umfangs sowie zu den nachfolgend beschriebenen bevorzugten Maßnahmen. Bei Belastung im mittleren Bereich wird in diesem mittleren Bereich die Außenseite der Schaftwand auf Druck, und die Innenseite auf Zug belastet, während dies in den seitlichen Bereichen umgekehrt ist. Hier wird die Außenseite auf Zug und die Innenseite auf Druck belastet.

Beispielsweise hat es sich vor diesem Hintergrund als günstig herausgestellt, die Stellen minimaler Wanddicke zwischen 10% und 30% sowie zwischen 70% und 90% der Breite der Schaftwand in Umfangsrichtung vorzusehen.

Ebenso kann, um möglichst umfangreich Gewicht einzusparen, die Wanddicke an der Stelle minimaler Wanddicke 40% bis 80% der in der Mitte vorliegenden Wanddicke betragen.

Wie bereits erwähnt, ist die Wanddicke in Richtung der Kolbenachse im Wesentlichen konstant oder nimmt zum Kolbenboden hin zu.

Die oben angedeuteten Überlegungen im Hinblick auf einen Biegebalken führen ferner dazu, dass die Kolbeninnenseite in dem mittleren Bereich eine konvexe Krümmung aufweist, und/oder dass die seitlichen Bereiche und/oder die Stellen minimaler Wanddicke an der Kolbeninnenseite konkav gekrümmt sind. Insofern kann von einer doppeltkonvexen Schaftwand in dem mittleren Bereich gesprochen werden. Der Krümmungsradius der konvexen Innenseite kann vergleichsweise groß sein. Er kann insbesondere auch unendlich groß werden, so dass sich eine ebene Fläche ergibt. Ebenso kann die Kolbeninnenseite auch in dem mittleren Bereich konkav gekrümmt sein.

Der erfindungsgemäße Kolben ist bevorzugt aus Aluminium, einer Aluminiumlegierung oder Stahl ausgebildet und eignet sich als Diesel- und Ottomotorkolben gleichermaßen.

In vorteilhafter Weise kann der erfindungsgemäße Kolben problemlos gegossen werden oder geschmiedet werden.

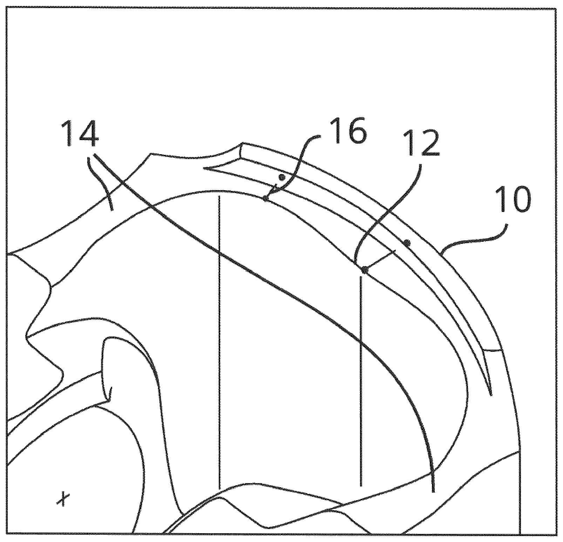

### Kurze Beschreibung der Zeichnung

Nachfolgend wird ein Ausführungsbeispiel anhand der Zeichnung näher erläutert.

Die Figur zeigt eine perspektivische Unteransicht einer Schaftwand des erfindungsgemäßen Kolbens.

Wie in der Figur zu erkennen ist, ist die Schaftwand 10 zum einen an der Außenseite zur Anlage an einer Zylinderbohrung oder -laufbuchse konvex gekrümmt. Erfindungsgemäß ist die Wanddicke der Schaftwand 10 in einem mittleren Bereich vergrößert. Diese vergrößerte Wanddicke ist bei der gezeigten Ausführungsform in Form einer an der Kolbeninnenseite zu erkennenden konvexen Krümmung 12 ausgebildet. Zu beiden seitlichen Bereichen hin, an denen die Schaftwand 10 mit der jeweiligen Verbindungswand 14 verbunden ist, nimmt die Wanddicke ebenfalls zu, so dass sich in dem gezeigten Fall etwa bei der Hälfte zwischen dem mittleren Bereich und dem seitlichen Rand eine Stelle 16 geringster Wanddicke ergibt. Hier, sowie an dem Übergang zu der jeweiligen Verbindungswand 14 stellt sich die Kolbeninnenseite konkav gekrümmt dar, wobei der Übergang von der konvexen Krümmung im mittleren Bereich krümmungsstetig, d.h. ohne Sprünge in der 2. Ableitung ausgebildet ist.

An dem in der Figur zu erkennenden unteren, d.h. vom Kolbenboden maximal weit entfernten Ende der Schaftwand weist diese zusätzlich eine Stufe auf. Mit anderen Worten ist die Schaftwand an der Außenseite in Richtung der Kolbenachse über etwa die Hälfte ihrer Wanddicke einige Millimeter länger als an der Innenseite. Die genannte Stufe dient zur Aufnahme des Kolbens bei der Bearbeitung.

## Patentansprüche

1. Kolben für einen Verbrennungsmotor mit zwei Schaftwänden (10), die durch Verbindungswände (14), die Kolbenbolzennaben tragen, verbunden sind, wobei zumindest eine Schaftwand (10) in einem, entlang des Kolbenumfangs mittleren Bereich (12) und in den seitlichen Bereichen eine größere Wanddicke aufweist als zwischen dem mittleren Bereich (12) und dem jeweiligen seitlichen Bereich, und an der Kolbeninnenseite in einem Schnitt senkrecht zur Kolbenachse krümmungsstetig ist, und wobei die Wanddickenverteilung in Richtung der Kolbenachse im Wesentlichen konstant ist.

2. Kolben nach Anspruch 1,
**dadurch gekennzeichnet, dass** die Stelle (16) minimaler Wanddicke zwischen 10% und 30% sowie zwischen 70% und 90% der Breite der Schaftwand (10) in Umfangsrichtung liegt.

3. Kolben nach Anspruch 1 oder 2,
**dadurch gekennzeichnet, dass** die Stelle minimaler Wanddicke (16) eine Wanddicke von 40% bis 80% der Wanddicke in dem mittleren Bereich aufweist.

4. Kolben nach einem der vorangehenden Ansprüche,
**dadurch gekennzeichnet, dass** die Wanddicke insgesamt in Richtung der Kolbenachse zum Kolbenboden hin zunimmt oder gleichbleibt.

5. Kolben nach einem der vorangehenden Ansprüche,
**dadurch gekennzeichnet, dass** die Kolbeninnenseite in dem mittleren Bereich konvex gekrümmt ist.

6. Kolben nach einem der vorangehenden Ansprüche,
**dadurch gekennzeichnet, dass** die seitlichen Bereiche an der Kolbeninnenseite konkav gekrümmt sind.

7. Kolben nach einem der vorangehenden Ansprüche,
**dadurch gekennzeichnet, dass** dieser aus Aluminium, einer Aluminiumlegierung oder Stahl ausgeführt ist.

8. Kolben nach einem der vorangehenden Ansprüche,
**dadurch gekennzeichnet, dass** dieser durch Giessen oder Schmieden hergestellt ist.

## Claims

1. Piston for an internal combustion engine having two shaft walls (10) which are connected by connecting walls (14) supporting piston pin hubs, wherein at least one shaft wall (10) has a greater wall thickness in a central region (12) along the piston circumference and in the lateral regions than between the central region (12) and the respective lateral region, and is of constant curvature on the inner side of the piston in a section perpendicular to the piston axis, and wherein the wall thickness distribution is substantially constant in the direction of the piston axis.

2. Piston according to claim 1,
**characterised in that**
the point (16) of minimum wall thickness lies between 10% and 30% and between 70% and 90% of the width of the shaft wall (10) in the circumferential direction.

3. Piston according to claim 1 or 2,
**characterised in that**
the point of minimum wall thickness (16) has a wall thickness of 40% to 80% of the wall thickness in the central region.

4. Piston according to one of the preceding claims, **characterised in that**
the wall thickness as a whole increases towards the piston crown or remains the same in the direction of the piston axis.

5. Piston according to one of the preceding claims, **characterised in that**
the inner side of the piston is convexly curved in the central region.

6. Piston according to one of the preceding claims, **characterised in that**
the lateral regions are concavely curved on the inner side of the piston.

7. Piston according to one of the preceding claims, **characterised in that**
this is made of aluminium, an aluminium alloy or steel.

8. Piston according to one of the preceding claims, **characterised in that**
this is produced by casting or forging.

## Revendications

1. Piston pour un moteur à combustion comprenant deux parois de tige (10) qui sont reliées par des parois de liaison (14) qui portent des moyeux d'axe de piston, dans lequel au moins une paroi de tige (10) présente dans une zone centrale (12) le long de la circonférence de piston et dans les zones latérales une épaisseur de paroi plus grande qu'entre la zone centrale (12) et la zone latérale respective, et est continue en courbure sur le côté intérieur de piston dans une coupe perpendiculaire à l'axe de piston, et dans lequel la répartition d'épaisseur de paroi en direction de l'axe de piston est sensiblement constante.

2. Piston selon la revendication 1,
**caractérisé en ce que**
le point (16) d'épaisseur de paroi minimale est compris entre 10 % et 30 %, ainsi qu'entre 70 % et 90 % de la largeur de la paroi de tige (10) en direction circonférentielle.

3. Piston selon la revendication 1 ou 2,
**caractérisé en ce que**
le point d'épaisseur de paroi minimale (16) présente une épaisseur de paroi allant de 40 % à 80 % de l'épaisseur de paroi dans la zone centrale.

4. Piston selon l'une quelconque des revendications précédentes,
**caractérisé en ce que**
globalement, l'épaisseur de paroi augmente en direction de l'axe de piston vers le fond de piston ou reste identique.

5. Piston selon l'une quelconque des revendications précédentes,
**caractérisé en ce que**
le côté intérieur de piston est incurvé de manière convexe dans la zone centrale.

6. Piston selon l'une quelconque des revendications précédentes,
**caractérisé en ce que**
les zones latérales sur le côté intérieur de piston sont incurvées de manière concave.

7. Piston selon l'une quelconque des revendications précédentes,
**caractérisé en ce que**
celui-ci est réalisé en aluminium, en alliage d'aluminium ou en acier.

8. Piston selon l'une quelconque des revendications précédentes,
**caractérisé en ce que**
celui-ci est fabriqué par coulée ou par forgeage.
